# EUROPÄISCHE PATENTSCHRIFT

(11) **EP 2 181 793 B1**
(45) Veröffentlichungstag und Bekanntmachung des Hinweises auf die Patenterteilung: **29.05.2013**
(21) Anmeldenummer: 08168239.5
(22) Anmeldetag: 04.11.2008
(51) Int. Cl.: B23K 1/00, B23K 3/06

(54) **Verfahren zum Beschichten der Stirnplatten eines Rohrbündel-Abgaswärmetauschers mit einer Lotpaste**
Method of coating the front plate of a pipe bundle exhaust gas heat exchanger with a soldering paste
Procédé destiné au revêtement des plaques frontales d'un échangeur thermique pour gaz d'échappement à faisceau de tubes

(43) Veröffentlichungstag der Anmeldung: 05.05.2010
(73) Patentinhaber: Umicore AG & Co. KG, 63457 Hanau (DE)
(72) Erfinder: Stroiczek, Martin, 63486, Bruchkoebel (DE); Koch, Juergen, 63457 Hanau (DE)

(56) Entgegenhaltungen:
- DE-A-102006 032 406
- US-A- 4 605 154
- US-A1- 2005 189 402

## Beschreibung

Die Erfindung betrifft ein Verfahren zum Beschichten der Stirnplatten eines Rohrbündel-Abgaswärmetauschers mit einer Lotpaste. Ein solches Verfahren ist in US 4 605 154 beschreibt.

Rohrbündel-Abgaswärmetauscher werden im großen Maßstab zur Kühlung des Abgases bei der Abgasrückführung von Dieselmotoren eingesetzt. Man spricht in diesem Zusammenhang von EGR-Kühlern (EGR = Exhaust Gas Recirculation). Solche Wärmetauscher bestehen aus einem Bündel von parallelen Wärmetauscherrohren in einem zylindrischen oder prismatischen Gehäuse, welches durch Stirnplatten abgeschlossen ist. Die Wärmetauscherrohre sind an beiden Ende in entsprechende Öffnungen der Stirnplatten eingelötet. Die Öffnungen sind in einem definierten Muster auf den Stirnplatten angeordnet. Zur Verbindung der Wärmetauscherrohre mit den Stirnplatten und weiteren Elementen des EGR-Kühlers wird wegen der hohen Temperaturbelastungen im Betrieb der Kühler das sogenannte Hochtemperaturlöten eingesetzt. Beim Verfahren des Hochtemperaturlötens handelt es sich um flußmittelfreie Lötungen im Schutzgas- oder Vakuumofen mit Löttemperaturen über 900 °C. Typische Hochtemperaturlote sind auf Kupfer- oder Nickelbasislegierungen sowie Edelmetallen aufgebaut.

Zum Einlöten der Wärmetauscherrohre werden die Stirnplatten mit einer Lotpaste beschichtet. Dies geschieht bei bekannten Verfahren mit Hilfe von Siebdruck. Das Beschichten der Stirnplatten von EGR-Kühlern mittels Siebdruck wird zum Beispiel beschrieben in dem Buch "Hartlöten und Hochtemperaturlöten: Grundlagen und Anwendung" von Lutz Dorn, herausgegeben 2007 im Expert-Verlag von W. J. Bartz und E. Wippler (ISBN-10:3-8169-2545-6).

Beim Siebdruck ist ein Siebgewebe fest in einem Rahmen fixiert. Die Siebdruckpaste wird auf das Siebgewebe aufgetragen und mit Hilfe eines elastischen Rakels durch die Öffnungen des Siebes auf das Bauteil übertragen.

Ein spezielles Druckbild wird durch die Verwendung einer Maske erreicht. Diese verschließt alle nicht zu druckenden Flächen des Siebgewebes, so daß die Siebdruckpaste an diesen Stellen nicht auf das Werkstück übertragen werden kann. Übliche Schichtdicken liegen im Bereich von 50 bis 100 µm; bis zu 600 µm dicke Schichten sind möglich. Eine typische Anwendung des Siebdruckes ist die Beschichtung der gelochten Stirnplatten von EGR-Kühlern. Die Stirnplatten werden mit Nickelbasislot-Siebdruckpasten selektiv und konturengenau beschichtet. Die benötigte Menge an Lotlegierung kann hierbei ohne Materialverlust aufgetragen werden. Nach dem Trocknen der Pastenschicht werden die Bauteile zusammengesetzt und in einem Ofen gelötet. Die beschichtete Fläche der Stirnplatte dient als Lotdepot und speist beim Löten die Lötspalte zwischen Stirnplatte und Kühlrohren und zwischen Stirnplatte und dem äußeren Gehäuse des Kühlers. Die Dicke der Lotpasten-Beschichtung muß dabei sicherstellen, daß auf der beschichteten Fläche der Stirnplatte genügend Lot für das Füllen der Lotspalte zur Verfügung steht.

Moderne Rohrbündelwärmetauscher zeichnen sich durch eine sehr dichte Anordnung der Wärmetauscherrohre aus. Die Abstände zwischen den Rohren betragen teilweise weniger als 0,5 mm. Diese geringen Abstände führen dazu, daß die für die Lotpasten-Beschichtung vorhandene Fläche der Stirnplatten nicht mehr ausreicht, um bei üblichen Dicken der Beschichtung noch genügend Lotmaterial für das Füllen der Lotspalte zur Verfügung zu stellen. Wie Versuche der Erfinder gezeigt haben, läßt sich das mit dem oben beschriebenen Siebdruckverfahren nicht durch Erhöhen der Schichtdicke kompensieren, da die Lotpaste wegen der geringen Breite der beschichteten Flächen teilweise beim Entfernen des Siebes von den Stirnplatten abgerissen wird.

Der Trend zu immer kleineren Abständen zwischen den Wärmetauscherrohren erhöht die Anforderungen an die Genauigkeit des Druckverfahrens. Zwar wird in dem zitierten Buch von einer konturengenauen Beschichtung mit Siebdruck gesprochen, das gilt jedoch nur im Rahmen der mit Siebdruck erzielbaren Positionsgenauigkeit für die gedruckten Strukturen. Die Genauigkeit liegt nach den Erfahrungen der Erfinder nur bei 10 bis 20 µm. Ursache hierfür ist die Tatsache, daß das Siebgewebe nicht direkt auf das zu bedruckende Werkstück aufgelegt wird, sondern erst durch den Druck des Gummirakels auf das Werkstück aufgedrückt wird und nach dem Lotauftrag wieder in seine Ursprungslage zurückspringt.

Aufgabe der vorliegenden Erfindung ist es daher, ein Verfahren zum Beschichten der Stirnplatten eines Rohrbündelwärmetauschers anzugeben, welches die genannten Probleme der bekannten Verfahren vermeidet.

Diese Aufgabe wird durch Anspruch 1 dieser Patentanmeldung gelöst. Bevorzugte Ausführungsformen des Verfahrens werden in den Unteransprüchen beschrieben.

Die Schablonen für das erfindungsgemäße Verfahren werden bevorzugt aus einem Metallblech entsprechender Dicke mit Hilfe von Laserschneidverfahren ausgeschnitten.

Das Verfahren wird an Hand der Figuren 1 bis 6 näher erläutert. Es zeigen:
- **Figur 1:**: Längsschnitt durch einen Rohrbündel-Wärmetauscher
- **Figur 2:**: Aufsicht auf eine Stirnplatte des Rohrbündel-Wärmetauschers
- **Figur 3:**: Schablone für die Beschichtung der Stirnplatte mit einer Lotpaste mittels Schablonendruck
- **Figur 4:**: Einzelheit A von Figur 1 mit Lotbeschichtung vor dem Verlöten der Wärmetauscherrohre mit nicht aufgeweiteten Enden der Rohre
- **Figur 5:**: Einzelheit A von Figur 1 mit Lotbeschichtung vor dem Verlöten der Wärmetauscherrohre mit aufgeweiteten Enden der Rohre
- **Figur 6:**: Beispiele für Schablonen mit verschiedenen Blendenquerschnitten:
a) Blenden mit zylindrischen Querschnitt
b) Blenden mit einem Querschnitt in Form eines Kegelstumpfes mit dem Kegelwinkel α
c) Blenden mit gestuftem Querschnitt

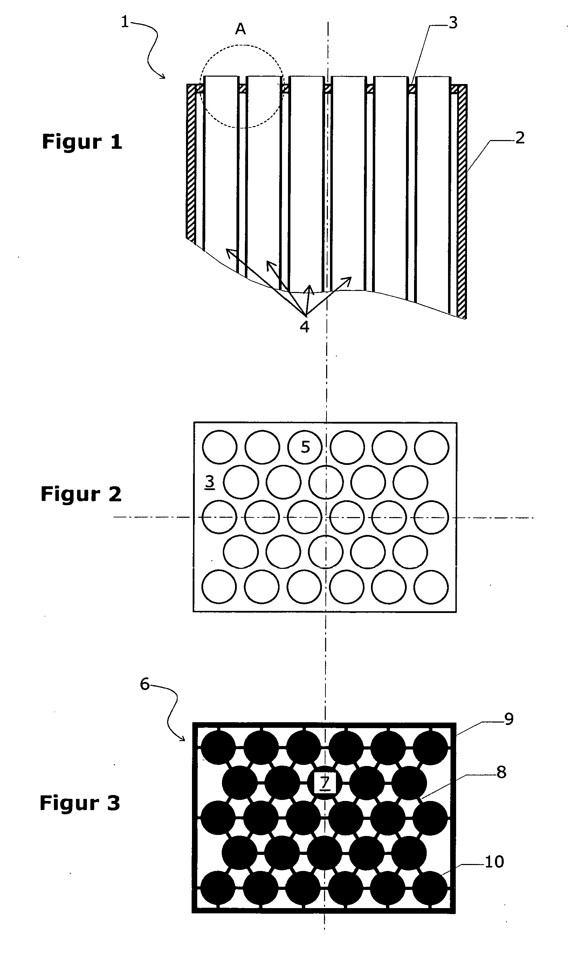

Figur 1 zeigt einen Längsschnitt durch einen Rohrbündelwärmetauscher (1). Er weist im allgemeinen eine zylindrische oder prismatische Form mit einer Mantelfläche (2) auf, wobei die Querschnittsform kreisförmig oder zum Beispiel rechteckförmig sein kann. Das Gehäuse (2) des Wärmetauschers ist an beiden Enden durch jeweils eine Stirnplatte (3) verschlossen. Beide Stirnplatten weisen Öffnungen (5) in einem definierten Muster auf, durch die die Wärmetauscherrohre hindurchgeführt sind. Stirnplatten (3) und Wärmetauscherrohre (4) sowie das Gehäuse (2) sollen möglichst in einem Arbeitsgang miteinander verlötet werden. Im Betrieb wird das heiße Abgas des Dieselmotors durch die Wärmetauscher geführt. Die Kühlung erfolgt durch Kühlwasser, das gewöhnlich im Kreuz- oder Gegenstrom an den Wärmetauscherrohren vorbeigeführt wird. Die Zu- und Ableitungen für das Kühlwasser sind in Figur 1 nicht gezeigt.

Figur 2 zeigt beispielhaft eine Stirnplatte (3) für einen Rohrbündelwärmetauscher mit rechteckförmigem Querschnitt, in die die Öffnungen (5) für die Wärmetauscherrohre eingebracht sind. In Figur 2 ist angenommen, daß die Wärmetauscherrohre einen runden Querschnitt aufweisen. Das erfindungsgemäße Verfahren ist jedoch in gleicher Weise auch für Wärmetauscher mit rechteckförmigen Rohren geeignet. Die Öffnungen (5) der Stirnplatte (3) weisen einen Abstand voneinander zwischen 0,1 und 2 mm auf. Bevorzugt liegt der Abstand zwischen 0,3 und 1 mm.

Figur 3 zeigt die Aufsicht auf eine Schablone zur Beschichtung der Stirnplatte von Figur 2 mit Lotpaste. Die Schablone weist einen Rahmen (9) auf, dessen Form mit der Form der Stirnplatte korrespondiert. Im Rahmen sind Blenden (10) im Muster der Öffnungen (5) der Stirnplatte (3) angeordnet. Die Blenden sind untereinander und mit dem Rahmen (9) über dünne Stege (8) verbunden. Die Anordnung der Stege (8) zwischen den Blenden (10) und zum Rahmen (9) ist eine Frage der Zweckmäßigkeit. Bevorzugt verbinden die Stege die Blenden (10) an den engsten Stellen zwischen ihnen.

Die Breite der Stege (8) zwischen den Blenden (10) der Schablone können zwischen 0,1 und 1, bevorzugt zwischen 0,3 und 0,5 mm, betragen. Mit diesen Abmessungen der Schablone ist es möglich, konventionelle Lotpasten in einer Dicke zwischen 0,1 und 1, bevorzugt zwischen 0,4 und 0,8 mm, auf die Stirnplatte aufzubringen.

Die Schablone (6) wird bevorzugt aus Edelstahlblech mittels Laserschneiden hergestellt. Die verwendete Blechdicke bestimmt dabei die Dicke der aufzubringenden Lotpastenbeschichtung. Die Blenden weisen die gleiche Form wie die Öffnungen (5) in der Stirnplatte (3) auf. Die Genauigkeit der Konturen der Schablone liegt beim Laserschneiden bei ±2 µm. Beim Drucken wird diese Schablone auf die Stirnplatte aufgelegt und hat somit direkten Kontakt mit der Oberfläche der Stirnplatte. Dadurch ist es möglich, die Lotpaste auf die Stirnplatten mit der Genauigkeit von ±2 µm aufzubringen.

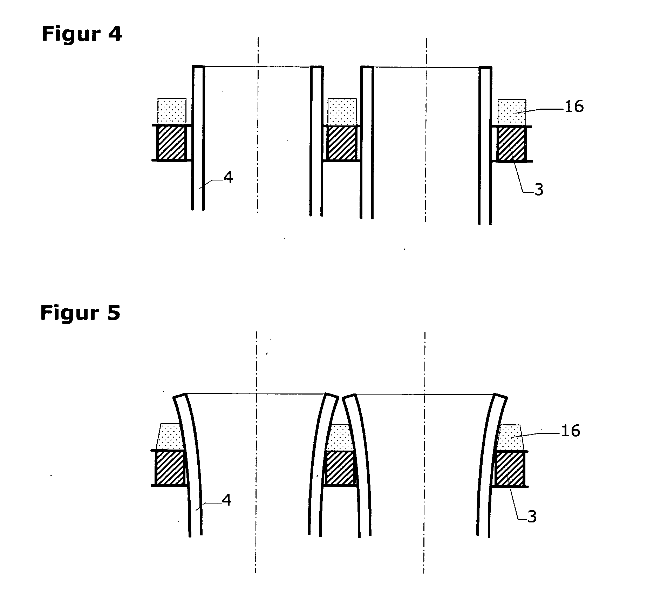

Figur 4 zeigt einen vergrößerten Ausschnitt A von Figur 1. Es ist die Situation nach dem Aufbringen und Trocknen der Lotpaste (16) auf die Stirnplatte (3) gezeigt und vor dem Verlöten mit den durch die Öffnungen in der Stirnplatte hindurchgesteckten Wärmetauscherrohre (4). Die Öffnungen für die Wärmetauscherrohre sind stets etwas größer als die Querschnittsabmessungen der Rohre, um ein leichtes Einführen der Rohre zu ermöglichen. Die verbleibenden Spalte zwischen den Rohren und den Wänden der Öffnungen müssen beim Verlöten vollständig mit der verwendeten Lotlegierung gefüllt werden.

Figur 4 verdeutlicht die Anforderungen an die Genauigkeit, mit welcher die Lotpaste auf die Stirnplatten aufgebracht werden muß. Wenn die Lotpaste durch ungenauen Auftrag teilweise in die freien Öffnungen hineinragt, besteht die Gefahr, daß die getrocknete Lotpaste beim Einführen der Wärmetauscherrohre zum Teil abgestoßen wird. Wird dagegen die Lotpaste sicherheitshalber mit deutlich größeren Öffnungen aufgebracht, so verbleiben um die Öffnungen in den Stirnplatten herum unbelotete Ring- oder Sichelzonen, die das Fließen der Lotlegierung in die Lotspalte verhindern können.

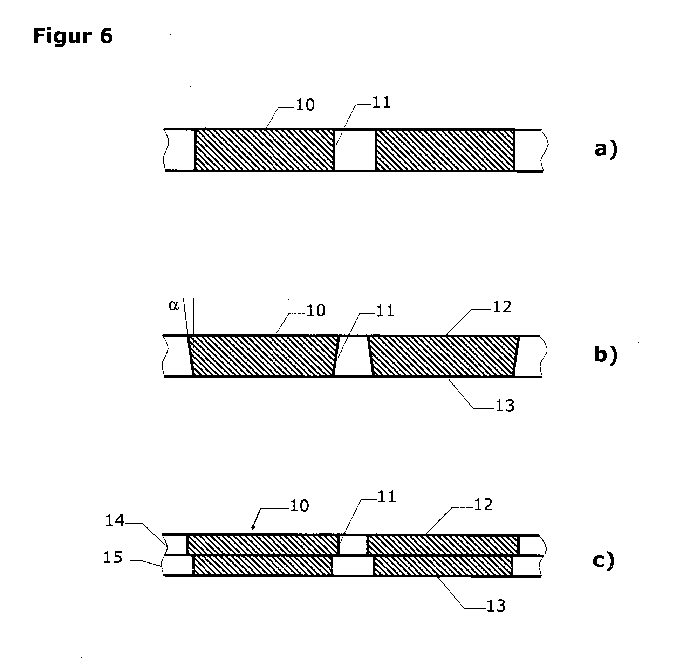

Figur 6 zeigt drei verschiedene Ausführungsformen der Druckschablone in Detailansicht. Mit der Schablone 6 a) kann ein Lotauftrag entsprechend Figur 4 erhalten werden. Die Blenden (10) weisen einen zylindrischen Querschnitt mit zylindrischen Schnitt- oder Mantelflächen (11) auf. Beim Abheben der Schablone von den Stirnplatten kann es deshalb passieren, daß noch frische Lotpaste von der Schablone mitgerissen wird. Diese Gefahr wird mit den Schablonenformen 6 b) und 6 c) vermindert.

Die Blenden (10) der Schablone 6 b) sind in Form von Kegelstümpfen ausgeführt, wobei die Schnitt- oder Mantelflächen (11) der Kegelstümpfe einen Kegelwinkel α zwischen 0 und 45° zu einer Kegelachse aufweisen. Durch diese Unsymmetrie muß zwischen Oberseite (12) und Unterseite (13) der Schablone unterschieden werden. Die Unterseite (13) der Schablone wird auf die Stirnplatten (3) der Wärmetauscher aufgelegt und muß daher den Abmessungen der Stirnplatten (3) mit ihren Öffnungen (5) entsprechen. Durch die geneigten Mantelflächen (11) kann die Schablone nach dem Beschichten leicht aus der noch feuchten Lotpaste ohne Abrisse der Lotpaste herausgehoben werden. Außerdem wird damit ein weiteres Problem gelöst, das in Figur 5 gezeigt ist: Figur 5 zeigt eine Variante zu Figur 4. In Figur 5 sind die Enden der Wärmetauscherrohre zur Fixierung der Rohre in der Stirnplatte etwas aufgeweitet. Dieser Vorgang wird auch als Aufkelchen bezeichnet. Hierbei besteht die Gefahr, daß die schon getrocknete Lotpaste abplatzt. Dies geschieht nicht, wenn die Mantelflächen (11) der Blenden (10) gemäß Figur 6 b) geneigt ausgeführt sind.

Alternativ zu geneigten Mantelflächen kann die Schablone (6) auch aus wenigstens zwei aufeinander laminierten Teilschablonen (14, 15) bestehen, wobei die Blenden (10) der Teilschablonen von einer untersten Teilschablone (15) zu einer obersten Teilschablone (14) in Stufen zunehmende Durchmesser aufweisen und wobei die Blendendurchmesser der untersten Teilschablone (15) exakt dem Durchmesser der Blendenöffnungen (5) der Stirnplatten (3) entsprechen. Man erhält dann die in Figur 6 c) dargestellte gestufte Schablone. Diese gestufte Schablone verhält sich in der Anwendung ähnlich positiv wie Schablonen mit geneigten Mantelflächen.

Wie schon ausgeführt, werden die Schablonen für das erfindungsgemäße Verfahren bevorzugt mit Hilfe eines Lasers aus Edelstahlblechen ausgeschnitten. Durch die keglige Strahlform des Lasers weisen die Schnitt- oder Mantelflächen auch schon bei senkrechtem Strahleinfall einen gewissen Neigungswinkel auf. Dieser Neigungswinkel kann darüber hinaus in gewünschter Weise durch schrägen Einfall des Schneidstrahls bewußt eingestellt werden.

Die EGR-Kühler werden im Betrieb hohen Temperaturen ausgesetzt. Sie müssen daher mit einem hochtemperaturfesten Lot verlötet werden. Geeignet hierfür sind Nickelbasislote, sogenannte Hochtemperaturlote.

Für die Belotung der Stirnplatten nach dem erfindungsgemäßen Verfahren werden Lotpasten verwendet, die zum Drucken dicker Schichten geeignet sind. Sie bestehen aus einem Lotpulver, einem organischen Bindemittel und einem Lösungsmittel. Bevorzugt weist die Lotpaste ein strukturviskoses Verhalten mit einer geringen Relaxationszeit auf. Durch die beim Druckvorgang wirkenden Scherkräfte verändert sich die Struktur des Bindemittels und die Viskosität der Lotpaste sinkt ab, so dass die Paste auch durch schmale Schablonenöffnungen auf das Bauteil gedruckt werden kann. Nach Ende des Druckvorgangs baut sich in kurzer Zeit die Struktur reversibel wieder auf und verhindert damit das ungewollte Verfließen der Lotpastenschicht. Eine geeignete Lotpaste ist zum Beispiel die kommerzielle Lotpaste P1002 der Anmelderin (siehe BrazeTec's Delivery Programme 999-01-2008, Seite 12). Diese Lotpaste enthält das Lotpulver NI 102-Pulver nach DIN EN 1044 mit folgender Zusammensetzung in Gewichtsprozent

| | |
|---|---|
| Nickel: | Rest |
| Chrom: | 6.0 - 8.0 |
| Silizium: | 4.0 - 5.0 |
| Bor: | 2.75 - 3.5 |
| Eisen: | 2.5 - 3.5 |

Der Schmelzbereich dieses Lotpulvers liegt zwischen 970 und 1000 °C. Damit auch feine Strukturen im Schablonendruck aufgetragen werden können, wird Lotpulver einer Korngröße kleiner 63 µm verwendet, das in der Paste in einem Gewichtsanteil von 80 - 95 Gew.-% enthalten ist.

## Patentansprüche

1. Verfahren zum Beschichten einer Stirnplatte (3) eines Rohrbündelwärmetauschers (1) mit einer Lotpaste in einer gewünschten Dicke, wobei die Stirnplatte (3) eine vorgegebene Form besitzt und in einem definierten Muster angeordnete Öffnungen (5) enthält für das spätere Einlöten von Wärmetauscherrohren (4),
**dadurch gekennzeichnet,**
**daß** auf die Stirnplatte (3) eine zum Muster der Öffnungen komplementäre Schablone (6) aufgelegt und die Lotpaste mit einem Rakel auf die Stirnplatte aufgebracht und nach Entfernen der Schablone in einem Ofen getrocknet wird, wobei die Schablone zum Abdecken der Öffnungen (5) Blenden (10) enthält, die durch dünne Stege (8) miteinander verbunden sind und die Dicke der Schablone der gewünschten Dicke der Lotpasten-Beschichtung entspricht.

2. Verfahren nach Anspruch 1,
**dadurch gekennzeichnet,**
**daß** die mit den Stegen (8) untereinander verbundenen Blenden (10) durch weitere Stege in einem Rahmen (9) befestigt sind.

3. Verfahren nach Anspruch 2,
**dadurch gekennzeichnet,**
**Daß** die Blenden (10) in Form von Kegelstümpfen ausgeführt sind, wobei die Mantelflächen (11) der Kegelstümpfe einen Kegelwinkel α zwischen 0 und 45° zu einer Kegelachse aufweisen.

4. Verfahren nach Anspruch 2,
**dadurch gekennzeichnet,**
**daß** die Schablone (6) aus wenigstens zwei aufeinander laminierten Teilschablonen (14, 15) besteht, wobei die Blenden (10) der Teilschab-Ionen von einer untersten Teilschablone (15) zu einer obersten Teilschablone (14) in Stufen zunehmende Durchmesser aufweisen.

5. Verfahren nach Anspruch 1,
**dadurch gekennzeichnet,**
**daß** die Öffnungen (5) der Stirnplatte (3) einen Abstand voneinander zwischen 0,1 und 2 mm aufweisen.

6. Verfahren nach Anspruch 1,
**dadurch gekennzeichnet,**
**daß** die Stege (8) zwischen den Blenden (10) der Schablone (6) eine Breite zwischen 0,1 und 1 mm aufweisen.

7. Verfahren nach Anspruch 1,
**dadurch gekennzeichnet,**
**daß** die Öffnungen (5) kreisförmig oder rechteckförmig sind.

8. Verfahren nach einem der vorstehenden Ansprüche,
**dadurch gekennzeichnet,**
**daß** die gewünschte Dicke der Lotpasten-Beschichtung zwischen 0,1 und 1 mm beträgt.

## Claims

1. Process for coating an end plate (3) of a tubular heat exchanger (1) with a brazing paste in a desired thickness, wherein the end plate (3) has a predefined shape and contains openings (5) arranged in a defined pattern for the subsequent brazing-in of heat-exchanger tubes (4),
**characterized**
**in that** a template (6) complementary to the pattern of the openings is placed onto the end plate (3) and the brazing paste is applied to the end plate with a doctor blade and dried in a furnace after the template has been removed, wherein the template contains screens (10) connected to one another by thin webs (8) for covering the openings (5) and the thickness of the template corresponds to the desired thickness of the brazing paste coating.

2. Process according to Claim 1,
**characterized**
**in that** the screens (10) connected to one another by the webs (8) are fastened in a frame (9) by further webs.

3. Process according to Claim 2,
**characterized**
**in that** the screens (10) are in the form of truncated cones, wherein the lateral surfaces (11) of the truncated cones include a cone angle α of between 0 and 45° with respect to a cone axis.

4. Process according to Claim 2,
**characterized**
**in that** the template (6) consists of at least two partial templates (14, 15) which are laminated onto one another, wherein the screens (10) of the partial templates have diameters which increase in stages from a lowermost partial template (15) to an uppermost partial template (14).

5. Process according to Claim 1,
**characterized**
**in that** the openings (5) in the end plate (3) are at a distance of between 0.1 and 2 mm from one another.

6. Process according to Claim 1,
**characterized**
**in that** the webs (8) between the screens (10) of the template (6) have a width of between 0.1 and 1 mm.

7. Process according to Claim 1,
**characterized**
**in that** the openings (5) are circular or rectangular.

8. Process according to one of the preceding claims,
**characterized**
**in that** the desired thickness of the brazing paste coating is between 0.1 and 1 mm.

## Revendications

1. Procédé pour le revêtement d'une plaque frontale (3) d'un échangeur de chaleur à faisceau de tubes (1) avec une pâte décapante en une épaisseur souhaitée, dans lequel la plaque frontale (3) possède une forme prédéterminée et comporte des ouvertures (5) disposées selon un motif défini pour le brasage ultérieur de tubes d'échangeur de chaleur (4), **caractérisé en ce que** l'on dépose sur la plaque frontale (3) un gabarit (6) complémentaire au motif des ouvertures et on applique la pâte décapante avec une racle sur la plaque frontale et on la sèche dans un four après l'enlèvement du gabarit, dans lequel le gabarit comporte des écrans (10) pour recouvrir les ouvertures (5), qui sont reliés les uns aux autres par des nervures minces (8) et l'épaisseur du gabarit correspond à l'épaisseur désirée du revêtement de pâte décapante.

2. Procédé selon la revendication 1, **caractérisé en ce que** les écrans (10) reliés les aux autres par les nervures (8) sont fixés dans un cadre (9) au moyen d'autres nervures.

3. Procédé selon la revendication 2, **caractérisé en ce que** les écrans (10) sont réalisés en forme de troncs de cône, dans lequel les surfaces latérales (11) des troncs de cône présentent une conicité α comprise entre 0 et 45° par rapport à un axe de cône.

4. Procédé selon la revendication 2, **caractérisé en ce que** le gabarit (6) se compose d'au moins deux gabarits partiels (14, 15) contrecollés l'un sur l'autre, dans lequel les écrans (10) des gabarits partiels présentent des diamètres croissant par paliers du gabarit partiel le plus inférieur (15) à un gabarit partiel le plus supérieur (14).

5. Procédé selon la revendication 1, **caractérisé en ce que** les ouvertures (5) de la face frontale (3) présentent une distance l'une de l'autre comprise entre 0,1 et 2 mm.

6. Procédé selon la revendication 1, **caractérisé en ce que** les nervures (8) entre les écrans (10) du gabarit (6) présentent une largeur comprise entre 0,1 et 1 mm.

7. Procédé selon la revendication 1, **caractérisé en ce que** les ouvertures (5) sont de forme circulaire ou rectangulaire.

8. Procédé selon l'une quelconque des revendications précédentes, **caractérisé en ce que** l'épaisseur désirée du revêtement de pâte décapante vaut entre 0,1 et 1 mm.
